# EUROPEAN PATENT SPECIFICATION

(11) **EP 1 305 188 B1**
(45) Date of publication and mention of the grant of the patent: **07.04.2004**
(21) Application number: 01949397.2
(22) Date of filing: 11.06.2001
(51) Int. Cl.: B60R 7/12

(54) **MOTOR-VEHICLE WITH UMBRELLA HOLDING CASE**
KRAFTFAHRZEUG MIT SCHIRMHALTERUNGSBEHÄLTER
VEHICULE A MOTEUR AVEC ETUI A PARAPLUIE

(30) Priority: 04.08.2000 IT PN000048
(43) Date of publication of application: 02.05.2003
(73) Proprietor: Plastal S.p.A., 33170 Pordenone (IT)
(72) Inventor: COLLAVO, Andrea, I-31044 Montebelluna (IT)
(74) Representative: Giugni, Valter
(86) International application number: PCT/EP2001/006562
(87) International publication number: WO 2002/012021

(56) References cited:
- EP-A- 0 036 675
- DE-A- 19 648 693
- GB-A- 2 283 218
- US-A- 3 081 126
- US-A- 5 358 307
- US-A- 5 469 977
- US-A- 5 800 004
- PATENT ABSTRACTS OF JAPAN vol. 1995, no. 11, 26 December 1995 (1995-12-26) & JP 07 223491 A (HINO MOTORS LTD), 22 August 1995 (1995-08-22)

## Description

The present invention refers to a motor-vehicle, in particular a motor-car, which is provided with an umbrella holding case, as described in the preamble of claim 1. GB 2 283 218 comprises the features mentioned in the preamble of claim 1.

As generally known, keeping an umbrella within immediate reach in the driver's cabin of a motor-car turns out to be quite inconvenient and cumbersome, especially when the umbrella is wet. On the other hand, it is normally desired to have the umbrella readily available in the driver's cabin whenever a need for it arises.

It therefore is a main purpose of the present invention to provide a motor-vehicle which is provided with an umbrella holding case that is not only capable of being conveniently and readily reached when a need arises for the umbrella to be used, but also has substantially negligible space requirements.

Another purpose of the present invention is to provide a motor-vehicle of the above cited kind, in which such an umbrella holding case is such as to enable a wet umbrella to be quickly and effectively dried.

A further purpose yet of the present invention is to provide a motor-vehicle of the above cited kind, in which the umbrella holding case can advantageously be made as a separate component part that can be easily assembled as an optional item in any substantially traditional motor-vehicle.

According to the present invention, these aims are reached in a motor-vehicle with umbrella holding case having the characteristics as recited in the appended claims.

Anyway, features and advantages of the present invention will be more readily understood from the description that is given below by way of non-limiting example with reference to the accompanying drawings, in which:
- Figure 1 is a schematical bottom view of a detail of the driver's cabin of a motor-vehicle according to a preferred embodiment of the present invention, with the umbrella holding case shown in its open state;
- Figure 2 is a schematical view of a detail of the driver's cabin of a motor-vehicle according to a different embodiment of the present invention;
- Figure 3 is a schematical, cross-sectional view of a detail of the motor-vehicle shown in Figure 1;
- Figure 4 is a schematical, perspective view of the umbrella holding case, shown with open lid, according to a preferred embodiment; and
- Figure 5 is a schematical, perspective view similar to the one illustrated in Figure 4, according to a different embodiment.

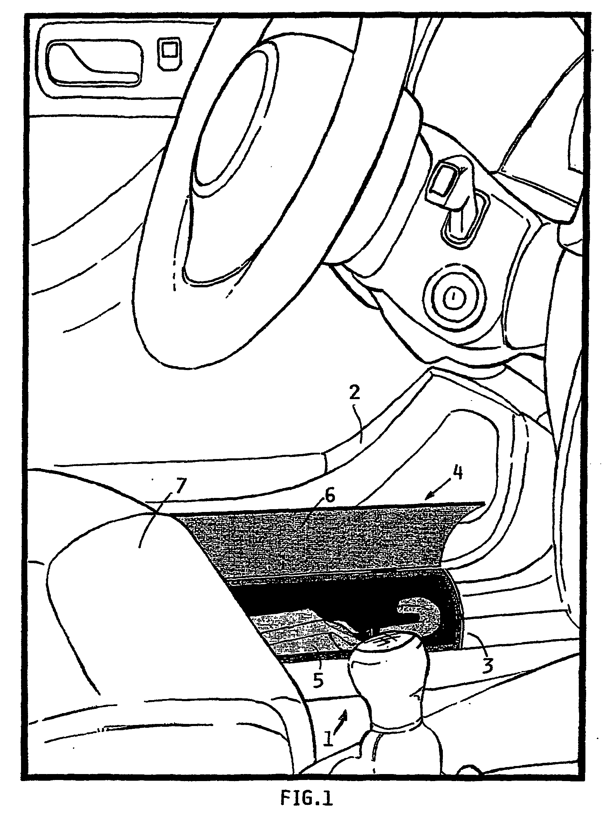

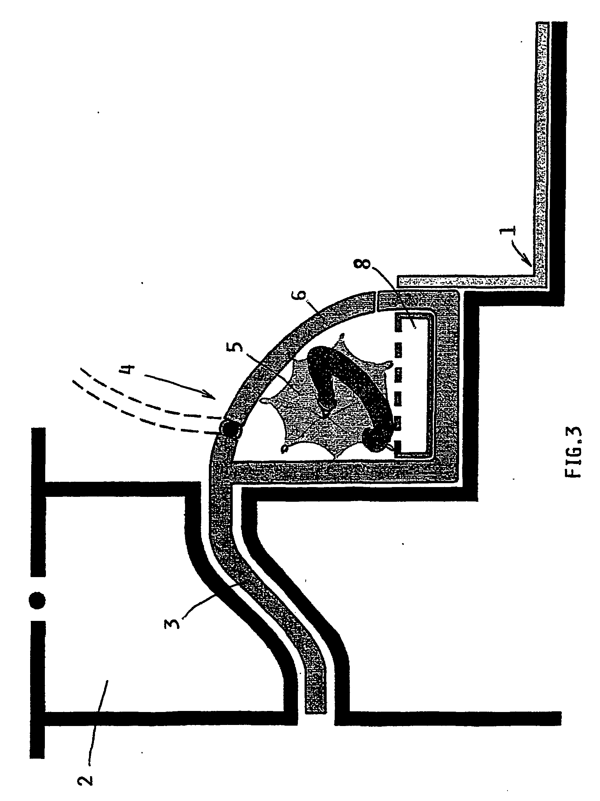

With particular reference to Figures 1 and 3, the motor-vehicle is preferably a motor-car which, in a traditional manner, comprises a driver's cabin with a platform 1 on the sides of which, in correspondence of the doors 2, there are provided respective sill boards 3.

In correspondence of at least one of said sill boards 3 there is built-in at least an umbrella holding case 4 having a substantially elongated box-like shape and adapted to accommodate longitudinally at least an umbrella 5 in its closed state, in which said umbrella holding case comprises an access lid 6 which, when closed, lies substantially flush with the outer surface of the sill board 3, in such a manner as to be able to make use of the internal space of the same sill board, without implying any substantial encumbrance or space-demanding problem.

The lid 6 is preferably hinged along a major side of the case 4 so as to be capable of being conveniently opened from at least one of the seats 7 in view of gaining access to the umbrella 5.

Under normal driving conditions, the lid 6 is closed and the umbrella 5 so remains concealed inside the case 4, where it is stored in conditions of full safety and convenient accessibility.

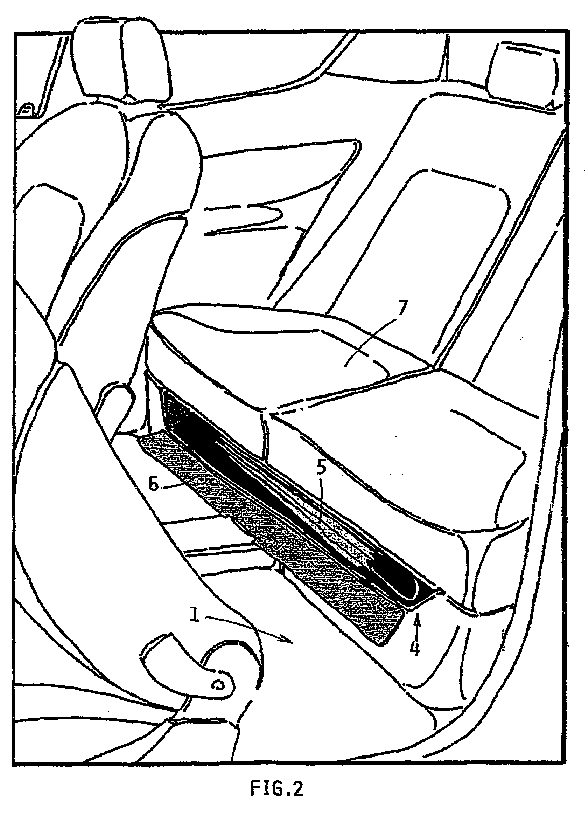

It will of course be appreciated that the case 4 may be arranged in any other suitable position within the driver's cabin of the vehicle. So, for instance, it may be located transversally at the base of the rear seats 7, as illustrated in Figure 2, or it may be built-in in the inside panel of at least a door 2.

In any case, particularly useful turns out to be the possibility for the umbrella 5 to be stored in the case 4 when the same umbrella is wet. However, the moisture that is released inside a closed space is quite likely to give rise to a number of drawbacks, which can on the other hand be effectively prevented by taking the measures that will be described below.

With reference to Figure 3, at the base of the case 4 there can be provided, internally, a pan 8 for collecting the water dripping from a wet umbrella 5. Such a drip pan 8 is removable, in view of being able to conveniently eliminate the water collected thereinto.

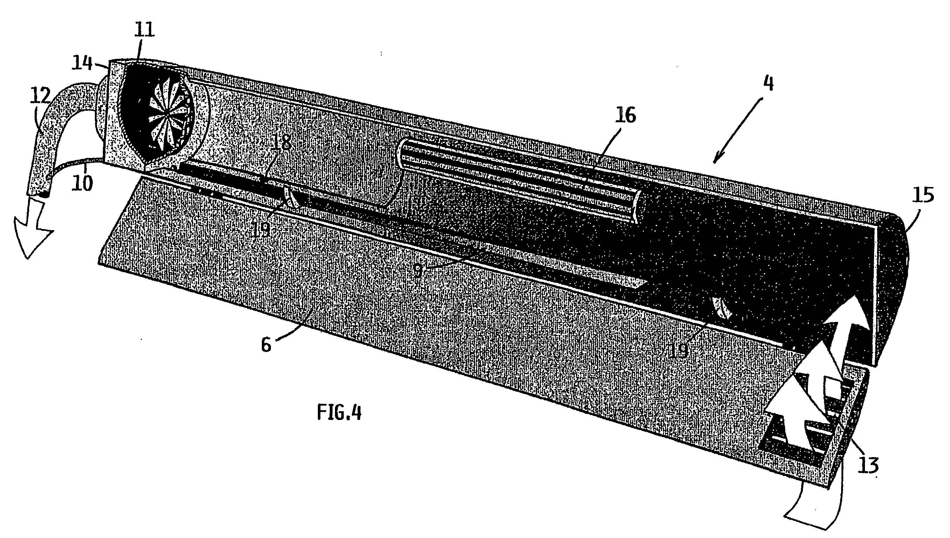

With reference to Figure 4, according to a more sophisticated embodiment the case 4 comprises internally, at its own base, a sloping gutter 9 adapted to not only collect the water dripping from a wet umbrella 5, but also to automatically convey such a water to a drain pipe 10.

The case 4 may further be provided, preferably in correspondence of an outlet aperture provided at a head extremity 14 thereof, with a motor-driven blower 11 (possibly protected by means of an appropriate screen grid) adapted to convey to an outlet conduit 12 a flow of air it takes in through at least an inlet 13 and circulates in a forced manner through the case 4.

The inlet 13 is preferably provided in the lid 6, in a position that is adjacent to the opposite head extremity 15, so that the air is practically capable of circulating throughout said case 4, thereby impinging against and blowing all along the umbrella 5 that may possibly be stored therein, and advantageously removing any possible residual moisture therefrom by at the same time conveying it towards the outlet conduit 12, which may for instance communicate with the outside of the vehicle. In this connection, the pipe 10 is preferably connected with the conduit 12, so that even the water collected by the gutter 9 is automatically carried off by the drain conduit.

It can be most readily be appreciated that, in this way, a wet umbrella 5 can be most quickly and effectively dried, while at the same time discharging outside the vehicle all of the moisture it is initially soaked with.

Such a drying effect of the umbrella 5 can be further improved by providing inside the case 4, eg. along the side walls thereof, one or more low-rated electric heating elements 16 (preferably guarded by some appropriate grid 17 or the like) which are adapted to be switched in, ie. energized, at the same time as the blower 11.

The blower 11, and possibly the heating elements 16, may be switched in either manually or automatically, according to the requirements. Anyway, in a preferred manner (as shown in a merely schematic way in Figure 4) the energization of at least one of said operational devices is controlled by at least a humidity sensor 18 arranged in the case 4 in a position in which it is able to come effectively into contact with the umbrella 5. By mere way of exemplification, said humidity sensor 18 may be a humidostat that is adapted to automatically bring about a flow of air circulating through the case 4, wherein such an air flow is possibly heated up by the heating elements 16, until the umbrella 5 (possibly held in position therein by appropriate retaining means 19) eventually dries up to a satisfactory extent.

In the embodiment illustrated in Figure 4, the case 4 with the related component parts associated thereto may also be pre-assembled and pre-tested as a separate module that can then be installed as an optional accessory item in a substantially traditional motor-vehicle.

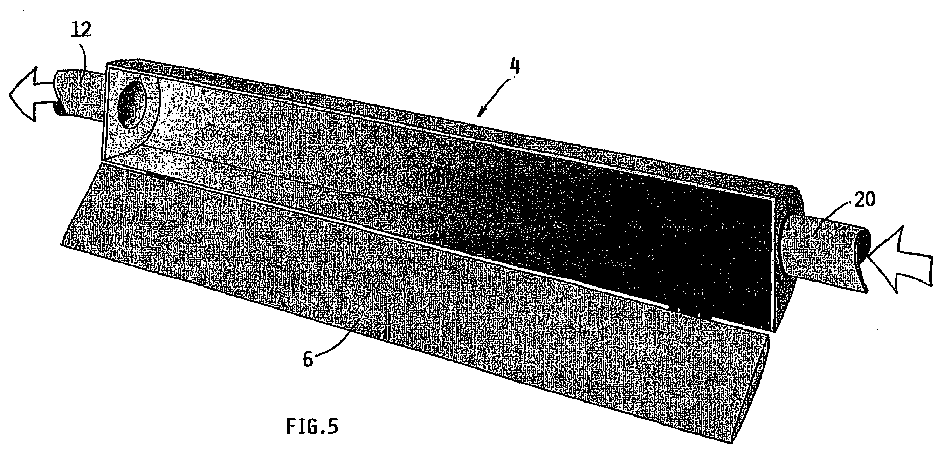

It will be appreciated that the above described motor-vehicle may be the subject of a number of modifications without departing from the scope of the present invention. With reference to Figure 5, for instance, the possibility is given for a high functional effectiveness of the umbrella holding case 4 to be obtained even without making use of the above cited blower 11 and heating elements 6. It is in fact sufficient for the outlet conduit 12 and a corresponding inlet conduit 20 (as provided at the head extremity 15 on the fixed portion of the case 4) to be connected to the (inherently known and therefore not shown in the Figure for reasons of greater simplicity) ventilation and/or air-conditioning circuit which the motor-vehicle is normally provided with.

Practically, the case 4 is connected in series to at least a portion of such a circuit, which is therefore capable of effectively drying up the wet umbrella 5. Should such a circuit be a part of a system providing air-conditioning in the driver's cabin of the motor-vehicle, the moisture released by the umbrella 5 as it dries up will condense in a still quicker and more effective manner in correspondence of the evaporator of said system.

## Claims

1. Motor-vehicle comprising a driver's cabin provided with such substantially hollow structural members as doors (2), sill boards (3), seats (7) and the like, and further comprising at least a box-like case (4) that is substantially built-in in one of said structural members (2; 3; 7), has a substantially elongated shape, is adapted to accommodate at least an umbrella (5), and is accessible through a lid (6) that closes it, said case (4) being provided with blower means (11) adapted to send to an outlet and/or exhaust conduit (12) the air that is taken in through at least an inlet (13; 20) of the case and is circulated in a forced manner through the same case (4) in view of drying the umbrella (5), **characterized in that** the energization of said blower means (11) being controlled by humidity sensor means (18) arranged in the case (4) in a position in which they are capable of detecting the moisture of said umbrella (5).

2. Motor-vehicle according to claim 1, **characterized in that** said case (4) is provided with at least a low-rated electric heating element (16) adapted to heat the interior of the case (4) and controlled by said humidity sensor means (18).

3. Motor-vehicle according to claim 1, **characterized in that** at the base of the case (4) there is internally provided a removable pan (8) for collecting the water dripping from said umbrella (5) when the latter is wet.

4. Motor-vehicle according to claim 1, **characterized in that** said inlet (13) is provided in said lid (6).

## Patentansprüche

1. Kraftfahrzeug, das einen Fahrzeuginnenraum umfasst, der mit im Wesentlichen hohlen strukturellen Elementen wie Türen (2), Schwellern (3), Sitzen (7) und dergleichen versehen ist, und das des Weiteren wenigstens ein kastenartiges Fach (4) umfasst, das im Wesentlichen in eines der strukturellen Elemente (2; 3; 7) integriert ist, eine im Wesentlichen längliche Form hat, so eingerichtet ist, dass es wenigstens einen Schirm (5) aufnimmt und über einen Deckel (6) zugänglich ist, der es verschließt, wobei das Fach (7) mit einer Gebläseeinrichtung (11) versehen ist, die so eingerichtet ist, dass sie die Luft, die über wenigstens einen Einlass (13; 20) des Fachs angesaugt und zwangsweise durch das Fach (4) zirkuliert, um den Schirm (5) zu trocknen, zu einer Auslass- und/oder Austrittsleitung (12) leitet, **dadurch gekennzeichnet, dass** das Anschalten der Gebläseeinrichtung (11) durch eine Feuchtigkeitssensoreinrichtung (18) gesteuert wird, die in dem Fach (4) an einer Position angeordnet ist, an der sie in der Lage ist, die Feuchtigkeit des Schirms (5) zu erfassen.

2. Kraftfahrzeug nach Anspruch 1, **dadurch gekennzeichnet, dass** das Fach (4) mit wenigstens einem schwachen elektrischen Heizelement (16) versehen ist, das so eingerichtet ist, dass es den Innenraum des Fachs (4) erhitzt, und das von der Feuchtigkeitssensoreinrichtung (18) gesteuert wird.

3. Kraftfahrzeug nach Anspruch 1, **dadurch gekennzeichnet, dass** an der Unterseite des Fachs (4) innen eine entnehmbare Schale (8) zum Auffangen des Wassers vorhanden ist, das von dem Schirm (5) abtropft, wenn er nass ist.

4. Kraftfahrzeug nach Anspruch 1, **dadurch gekennzeichnet, dass** der Einlass (13) in dem Deckel (6) vorhanden ist.

## Revendications

1. Véhicule automobile une cabine du conducteur pourvue d'éléments structuraux essentiellement creux tels que portières (2), saillies de seuil (3), sièges (7) et similaires, et comprenant aussi au moins un étui en forme de boîte (4) qui est essentiellement intégré dans un desdits éléments (2; 3; 7), a une forme essentiellement allongée, est apte à accueillir et contenir au moins un parapluie (5) et est accessible à travers un couvercle (6) de fermeture, ledit étui (4) étant pourvu de moyens de ventilation (11) aptes à envoyer à un évent et/ou conduit d'échappement (12) l'air qui est aspiré à travers au moins une entrée (13 ; 20) de l'étui et est fait circuler d'une façon forcée à travers le même étui (4) afin d'essuyer le parapluie (5), **caractérisé en ce que** la mise sous tension desdits moyens de ventilation (11) est commandée par des moyens senseurs d'humidité (18) disposés dans l'étui (4) dans une position où ils sont à même de détecter l'humidité dudit parapluie (5).

2. Véhicule automobile selon la revendication 1, **caractérisé en ce que** ledit étui (4) est pourvu d'au moins une résistance chauffante électrique (16) de faible puissance apte à chauffer l'intérieur de l'étui (4) sous contrôle desdits moyens senseurs d'humidité (18).

3. Véhicule automobile selon la revendication 1, **caractérisé en ce qu'**une cuvette amovible (8) servant à recueillir l'eau s'écoulant du parapluie (5) lorsque celui-ci est mouillé est placée à l'intérieur de l'étui (4) sur le fond de celui-ci.

4. Véhicule automobile selon la revendication 1, **caractérisé en ce que** ladite entrée (13) est pourvue dans ledit couvercle (6).
